# EUROPEAN PATENT SPECIFICATION

(11) **EP 1 222 077 B1**
(45) Date of publication and mention of the grant of the patent: **19.05.2004**
(21) Application number: 99950240.4
(22) Date of filing: 06.10.1999
(51) Int. Cl.: B60C 11/04, B60C 11/13, B60C 121/00

(54) **AN ALL-TERRAIN VEHICLE TIRE**
EIN GELÄNDEREIFEN
PNEU TOUT-TERRAIN

(43) Date of publication of application: 17.07.2002
(73) Proprietor: THE GOODYEAR TIRE & RUBBER COMPANY, Akron, Ohio 44316-0001 (US)
(72) Inventor: ROONEY, Timothy, Michael, Munroe Falls, OH 44262 (US)
(74) Representative: Kutsch, Bernd
(86) International application number: PCT/US1999/023338
(87) International publication number: WO 2001/025029

(56) References cited:
- WO-A-93/21028
- WO-A-98/03356
- FR-A- 2 201 193
- GB-A- 1 236 335
- GB-A- 2 021 049
- US-A- 4 574 857
- US-A- 5 259 429
- US-A- 5 375 640
- US-A- 5 377 734

## Description

### Technical Field

This invention relates to off-the-road tires, more specifically, this invention relates to a pneumatic all-terrain vehicle tire.

### Background of the Invention

All-terrain vehicles are relatively light weight with a relatively low center of gravity. Early three wheel versions had knobbly tires having small square block elements and a relatively shallow tread depth.

Later versions of "Quad runners" or 4-wheel type ATV's were developed and have been more widely accepted due to their improved stability. Horsepower increases and improvements in both vehicle suspension and chassis has resulted in vehicles capable of relatively high speed and much greater load carrying capacity.

The tires used on these vehicles are operated at very low pressures in the .7 bar (10 psi) or less range. The tires are very wide with relatively large air chambers which assist in absorbing shock and vibration. The tires generally have nominal rim diameters of 36 cm (14 inches) or less and overall diameters of 69 cm (27 inches) or less.

Often the rear tires are of a slightly larger size than the more lightly loaded front tires.

In aggressive off-the-road applications, the tires must have a very open tread pattern that employs elongated lugs which provide effective straightline or drawbar traction to enable the vehicle to climb hilly and rough terrain, as shown in U.S. Design Patent No. 308,038. Additionally, the tread must provide excellent lateral traction for vehicle stability during turning maneuvers as is disclosed in U.S. Patent No. 5,259,429.

The tire disclosed in that patent employs a repeating pattern of long, intermediate length and short lugs arranged to provide improved traction. The arrangement of these lugs is such that each lug wraps completely over the tread shoulder portion. The lugs are also circumferentially relatively closely spaced such that numerous lugs are in the footprint of the tire at any one time. The tire made according to this prior art invention is considered one of the best mud tires in its class according to its manufacture. As disclosed in U.S. Patent No. 5,375,640, the tire also may have conical or tapered knobs as secondary lugs.

These secondary knobs provide increased maneuverability and provide resistance to extrusion, or expulsion of soft earth, sand or snow between the lugs during normal travel.

A problem commonly associated with these tapered knobs is that, while they resist expulsion of mud in some cases, they can actually clog the tread with mud in some clay-based soils.

A secondary problem is that the knobs have a radially outer surface area that is so small that, when placed in contact with a firm soil, the knobs tend to wear very quickly providing little or no tread wear enhancement.

A third problem is that the conical shape limits the utility of the knobs. Such knobs mainly a soil penetrating cleat without any meaningful soil biting edges to assist in traction enhancement.

The most relevant prior art document is U.S. 4,574,857, which has the features recited in the preamble of claim 1.

An object of the present invention is to provided reduced height tread elements that provide a means for soil flow path diverting and increased traction edges for improved traction.

Another object of the invention is to provide the reduced height tread elements in a configuration that provides additional tread wearing surfaces while improving off-the-road traction.

A further object of the invention is to improve cornering stability by increasing the number of lug edges.

### Disclosure of the Invention

### Summary of the Invention

An off-the-road tire (10) having a radially outer tread (12) having a plurality of elongated lugs (40, 42) is disclosed. The elongated lugs (40, 42) have a maximum tread depth D as measured from a radially outer surface of the elongated lugs (40, 42) inwardly to an inner tread surface (13).

The off-the-road tire (10) has a plurality of tread elements (80) interposed between the elongated lugs (40, 42). The tread elements (80) have three or more sides (83, 84, 85 and 86) extending from the inner tread surface (13) to a radially outermost surface (82), the radially outermost surface (82) have a maximum depth d, d being less than D and, wherein at least one side of the tread elements (80) is oriented substantially parallel to an adjacent lug (40 or 42). The traction element (80) in a preferred embodiment additionally has at least one side (83, 84, 85 or 86) having a concave curvature. The concave curvature provides a means for redirecting or diverting the soil flow path when the tire is used in sloppy soil or snow.

The tread elements (80) has one or more sides (83, 84, 85, 86 and 87) radially inclining at an angle β, β being equal to or greater than 8°.

In the preferred embodiment tire (10), the elongated lugs (40, 42) have curved leading and trailing edges. The inner tread (13), in combination with the elongated lugs (40, 42), form channels (60) to discharge soil. It is within these soil discharged channels (60) that one or more tread elements (80) are oriented to redirect or divert the discharging soil. Most preferably, the tread elements (80) are located near an opening at an axially inner location (61) or an axially outer location (62). These openings being between circumferentially adjacent soil discharge channels (60) are preferably alternated from axially inner location (61) to axially outer locations (62) between the circumferentially adjacent soil discharge channels (60).

The radially outer surface (82) of the tread elements (80) occupy an area of at least 0.25 square inches (160 mm²).

The off-the-road tire (10) of the preferred embodiment is an all-terrain vehicle tire having a carcass (30) reinforced by two or more biased angle plies (38).

**Definitions** "All Terrain Vehicle (ATV)" is any motorized off-highway vehicle 50 inches (1270 mm) or less in overall width, with an unladen dry weight of 600 lbs. (275 kg) or less, designed to travel on four or more low pressure tires, having a seat designed to be straddled by the operator and handlebars for steering control, and intended for use by a single operator and no passenger. Width and weight shall be exclusive of accessories and optional equipment. ATV's are subdivided into four categories as follows:
Category G (General Use Model) ATV: An ATV intended for general recreational and utility use;
Category S (Sport Model) ATV: An ATV intended for recreational use by experienced operators only;
Category U (Utility Model) ATV: An ATV intended primarily for utility use.
Category Y (Youth Model) ATV: An ATV intended for recreational off-road use under adult supervision by operators under age 16. Youth model ATV's can further be categorized as follows:
   Category Y-6 ATV: A Category Y-6 ATV is a youth model ATV which is intended for use by children age 6 and older.
   Category Y-12 ATV: A Category Y-12 ATV is a youth model ATV which is intended for use by children age 12 and older.

"Aspect Ratio" means the ratio of its section height to its section width.

"Axial" and "axially" means the lines or directions that are parallel to the axis of rotation of the tire.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Bias Ply Tire" means that the reinforcing cords in the carcass ply extend diagonally across the tire from bead-to-bead at about a 25-65° angle with respect to the equatorial plane of the tire, the ply cords running at opposite angles in alternate layers.

"Carcass" means a laminate of tire ply material and other tire components, excluding the tread and any belt reinforcements, these additional components may be added to the carcass prior to its being vulcanized to create the molded tire.

"Equatorial Plane (EP)" means the plane perpendicular to the tire's axis of rotation and passing through the center of its tread.

"Inner" means toward the inside of the tire and "outer" means toward its exterior.

"Outer" means toward the tire's exterior.

"Pneumatic tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Section Height" (SH) means the radial distance from the nominal rim diameter to the outer diameter of the tire at its equatorial plane.

"Section Width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Sidewall" means that portion of a tire between the tread and the bead.

"Tread" means a molded rubber component which when, bonded to a tire casing, includes that portion of the tire that comes into contact with the road when the tire is normally inflated and under normal load.

"Tread Width or Tread Arc Width" means the arc length of the tread surface in the axial direction, that is, in a plane parallel to the axis of rotation of the tire.

### Brief Description of Drawings

FIGURE 1 is a perspective view of the preferred tire according to the invention.
FIGURE 2 is a plan view of the tire of FIGURE 1.
FIGURE 3 is a cross-sectional view of the tire taken along lines 3-3 of FIGURE 2.
FIGURE 4 is an enlarged fragmentary view of the tire of FIGURE 1.
FIGURE 5 is an alternative lug and block construction for the tire of FIGURE 1.
FIGURE 6 is a soil discharge flow pattern of a footprint of the tire of FIGURE 1.

### Detailed Description of the Invention

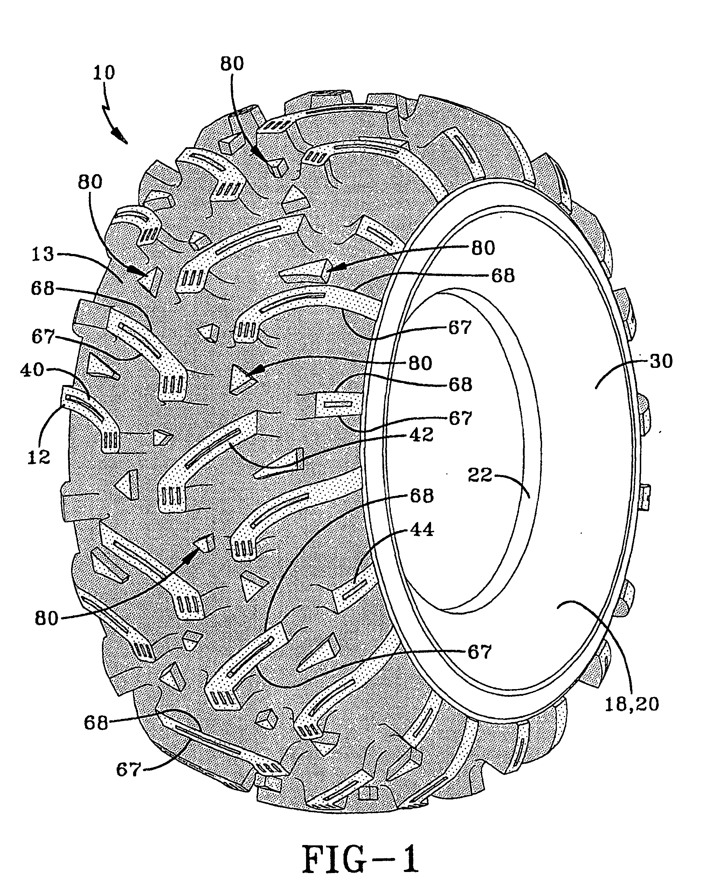

With reference to FIGURE 1 the preferred tire (10) according to the present invention is illustrated. The tire (10) has a nominal rim diameter of 36 cm (14 inches) or less; a carcass (30) a tread (12) disposed radially outward of the carcass.

The reference numerals as depicted in the drawings are the same as those referred to in the specification. For purposes of this application, the various embodiments illustrated in FIGURES 1-6 each use the same reference numerals for similar components.

The tread (12) has an inner tread (13) and a plurality of short blocks (44) and a plurality of elongated lugs (40, 42) extending radially outward of the inner tread (13) as well as a plurality of traction elements (80).

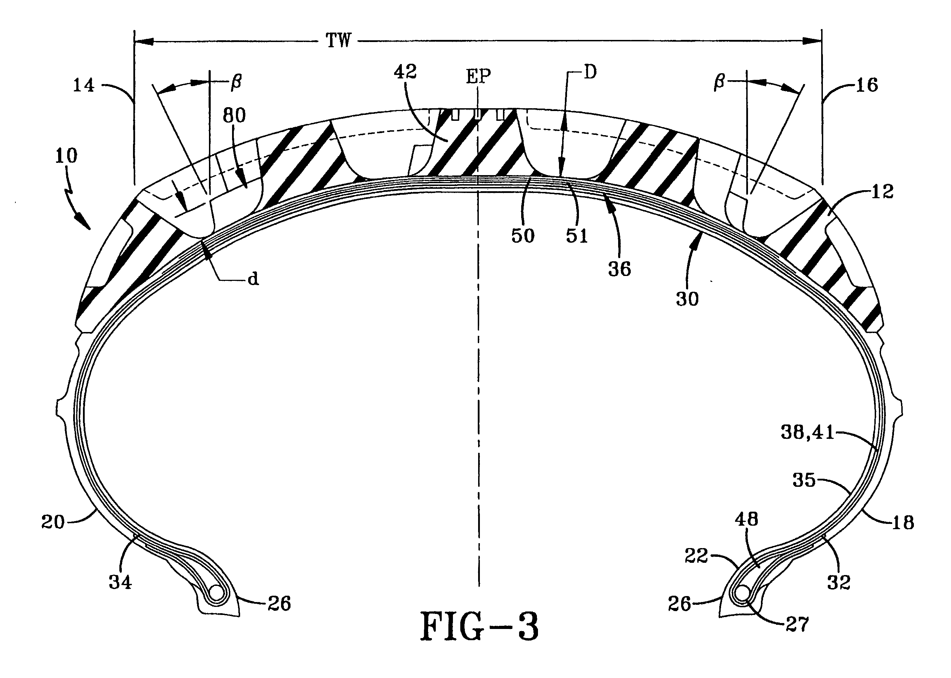

Referring to FIGURE 3, a cross-sectional view of the preferred tire (10) is shown.

The tire (10) according to the present invention is an ATV tire. The tire (10) is provided with a ground-engaging tread portion (12) which terminates in the shoulder portions at the lateral edges (14, 16) of the tread (12). Sidewall portion (18, 20) extends from tread lateral edges (14, 16) respectively and terminates in a pair of bead regions (22) each having an annular inextensible bead core (26) respectively. The tire (10) is further provided with a carcass (30) which has a reinforcing ply structure (38) which extends from bead region (22) through sidewall portion (18), tread portion (12), sidewall portion (20) to bead region (22). The turn-up ends (32, 34) of ply structure (38) are preferably wrapped about bead cores (26) respectively. The tire (10) may include a conventional innerliner (35) forming the inner peripheral surface of the tire (10), if the tire is to be of the tubeless type. One pair of tread reinforcing belt or breaker structures (36) may optionally be placed circumferentially about the radially outer surface of reinforcing ply structure (38) beneath tread portion (12). In the particular embodiment illustrated, breaker structures (36) each comprises two cut breaker plies (50, 51) and the cords of breaker plies (50, 51) are oriented at an angle of about 35° with respect to the midcircumferential centerplane of the tire.

The cords of breaker ply (50) are disposed in an opposite direction to the midcircumferential centerplane and from that of the cords of breaker ply (51). However, the belt or breaker structures (36) if used in the ATV tire may comprise any number of belt or breaker plies of any desired configuration and the cords may be disposed at any desired angle. Belt or breaker structures (36) provide lateral stiffness across the belt width so as to help minimize lifting of the tread from the road surface during operation of the tire as well as providing puncture resistance. In the embodiment illustrated, this can be accomplished by making the cords of belt or breaker plies (50, 51) of nylon or similar synthetic material.

It must be appreciated that the employment of a belt or breaker structure can have detrimental effects on ride and handling and, therefore, in many applications the use of such features may be undesirable for a particular ATV vehicle. Furthermore, these belt or breaker structures may be desirable on the front tires or the rear tires but not both the front and rear tires. One of ordinary skill in the tire art can easily appreciate when such components should be employed and when they should be avoided.

The tire illustrated in FIGURE 3 shows the carcass (30) which has at least one reinforcing ply structure (38). The reinforcing ply structure (38) has at least one ply layer of cords (41) for a radial ply tire, the cords (41) being oriented at an angle in the range of 65° to 90° relative to the equatorial plane and the structure (38) for a bias tire has at least two ply layers of cords (41), the cords of each adjacent layer being equal but oppositely oriented at an angle of 25° to 65° with respect to the equatorial plane of the tire.

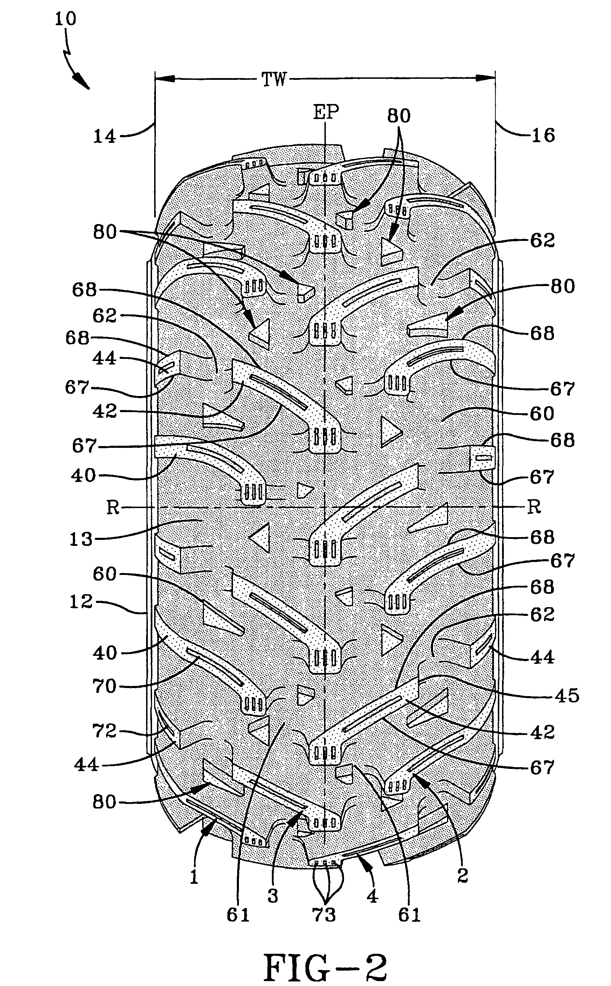

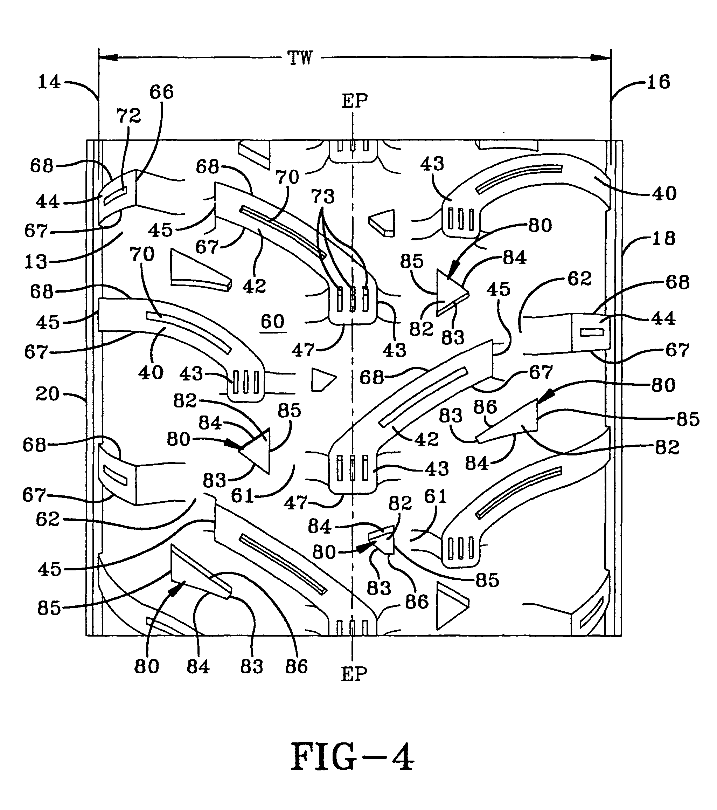

Referring to FIGURES. 2 and 4, a plan view of the tire (10) is illustrated and an enlarged fragmentary portion of the tread (12) is shown.

The lateral edges (14, 16) are defined as planes perpendicular to the tire axis of rotation R and intersecting the axially outermost portions of the lug or blocks in the shoulder regions. The distance between the lateral edges defines the tread arc width and the tread width. The distance halfway between the lateral edges is the equatorial centerplane EP of the tire (10). The tread (12) has elongated lugs (40, 42) and short blocks (44) extending radially outward from the inner tread (13). Each lug (40, 42) and block element (44) has a leading edge (67) and a trailing edge (68). Preferably, the leading and trailing edges are parallel and are curved.

The lugs (40, 42) are arranged into four circumferentially repeating rows (1, 2, 3, 4). A first and second shoulder row (1, 2) extends laterally inward from a shoulder portion of the tread (12). A third and fourth central row (3, 4) extends laterally from a central portion of the tread (12) toward one of the tread shoulder portions. The lugs (42) of the central third and fourth rows (3, 4) each have an axially outer end (45) axially spaced axially inward of and circumferentially aligned with an adjacent block (44) located in a shoulder portion of the tread. Each lug (42) of the third central row (3) is circumferentially interposed between a pair of the shoulder lugs (40) of the first row (1). Similarly, each lug (42) of the fourth central row (4) is interposed between a pair of the shoulder lugs (40) of the second row (2). The lugs (40, 42) of the first and third rows are similarly but oppositely inclined relative to the lugs (40, 42) of the second and fourth rows.

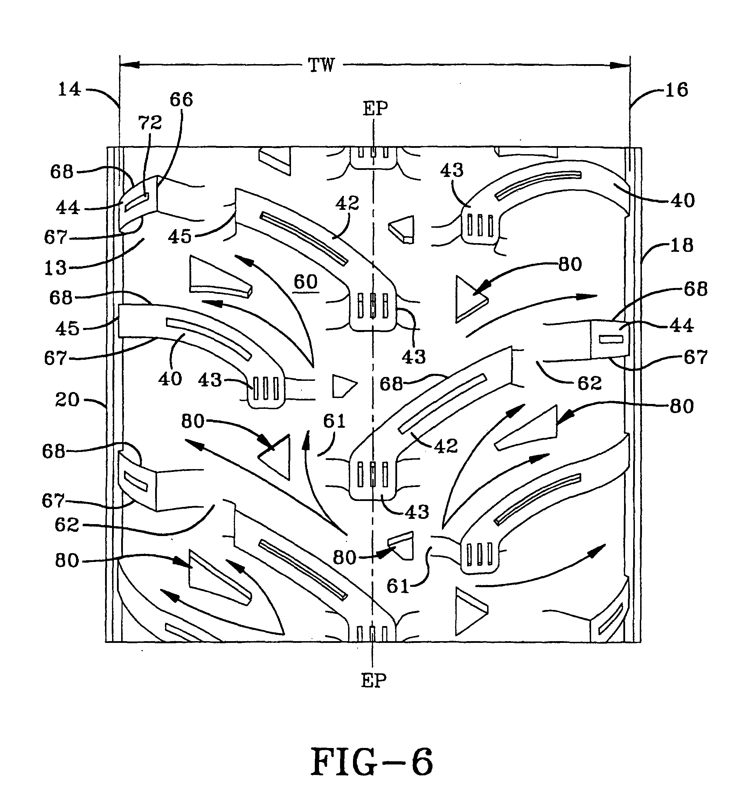

As shown in FIGURE 6, volumetric space above the inner tread (13) between the circumferentially adjacent lugs (40, 42) of the first, second, third and fourth rows (1, 2, 3, 4) and the shoulder blocks (44) form soil discharge channels (60) extending from the central portion of the tread (13) axially outwardly to a tread shoulder. Each soil discharge channel (60) is opened to one circumferentially adjacent soil discharge channel (60) via an opening at an axially inner location (61) and is opened to another circumferentially adjacent soil discharge channel (60) via an opening at an axially outer location (62). The openings at the axially inner location (61) and the openings at the axially outer location (62) alternate in the circumferential direction. The axial width of each opening at each axially inner location (61) and each axially outer location (62) is in the range of 15 % to 25%, preferably about 20 % of the axial arc width of one tread half. The opening at the axially inner location (61) is between an axially inner end of a shoulder lug (40) and an axially inner end of a central lug (42). Whereas, the opening at the axially outer location (62) is between a central lug (42) and a block (44). The openings at each of the axially inner and axially outer locations (61, 62) are between circumferentially extending and parallel edges (64, 66) of the lugs (40, 42) and the lugs (42) and blocks (44) respectively.

Preferably each lug (40, 42) of the first, second, third and fourth row (1, 2, 3, 4) has an enlarged circumferentially extending lug head (43) located at an axially inner end (47) of the lug (40, 42), more preferably the lug heads (43) of the third and fourth rows (3, 4) are axially aligned and lying on the equatorial plane. Additionally, the enlarged lug heads (43) of the lugs (40) of the first row (1) are substantially aligned axially with the axially outer end (45) of the circumferentially adjacent lug (42) of the third row (3). Similarly situated are the lugs (40) of the second row (2) relative to the lugs (42) of the fourth row (4). This means that the enlarged lug head (43) of the lugs (40) of the first and second row are axially inward of the axially outer location (62) between the lug end (45) of the lug (42) and the aligned block (44).

The lugs (40, 42) and blocks (44) extend from the inner tread (13) a radial distance (D) of about 2.0 cm or more, preferably about 2.5 cm. This deep non-skid tread (12) is superior in traction in wet or sloppy soil conditions. The channels (60) are arranged such that as the tire (10) rotates and the lugs (40, 42) enter the footprint or ground-contacting portion at least two of lugs (40) and two of lugs (42) or three soil discharge channels (60) are engaging the soil on one or both tread halves. The soil or mud is quickly expelled either axially over the shoulder or circumferentially laterally through the locations (61, 62). Furthermore, the mud cannot pack around these deep lugs (40, 42) due to the unique lug spacing and the circumferential openings at locations (61, 62) between the channels (60) which actually prevents mud from packing in the tread pattern as the tire (10) rotates.

An important feature of the tread (12) of the current invention of the preferred embodiment tire is the circumferentially extending enlarged lug heads (43). These features enhance the ride of the tire (10) when the ground is firm by insuring that there is a sufficient lug contact with the road to prevent these tall lugs (40, 42) from squirming as they enter or leave the tire's footprint or contact patch as the tire rotates. Additionally, as can further be observed from the drawings the lugs (40, 42) are arranged such that at least two lugs on the tread are in contact along a one inch wide axial band at any circumferential location of the tread. That is, if one draws a one inch wide band axially across the tread the band will intersect at least two lugs, preferably the band width is substantially less than one inch.

These features make the driver feel that he has a large amount of tread in contact with the road surface when in fact only a very small percentage of the contact patch is in road contact.

This tread according to the invention has less than 25 % of the tread contacting a paved surface, preferably less than 20 %, as shown 17%.

Unlike farm tires which travel at speeds of less than 25 miles per hour on roads. This ATV tire must be capable of speeds close to 50 mph. At such speeds the lugs must work in concert to prevent harsh vibrations from being created which could on unstable vehicle. This tread pattern when operated a low pressure can sufficiently dampen these vibration to permit the tire to be operated as high speed. This is made possible by the shape and the orientation of the lugs as shown. Each lug (40, 42) has a somewhat circumferential as well as lateral inclination which enhances the tire's ride performance.

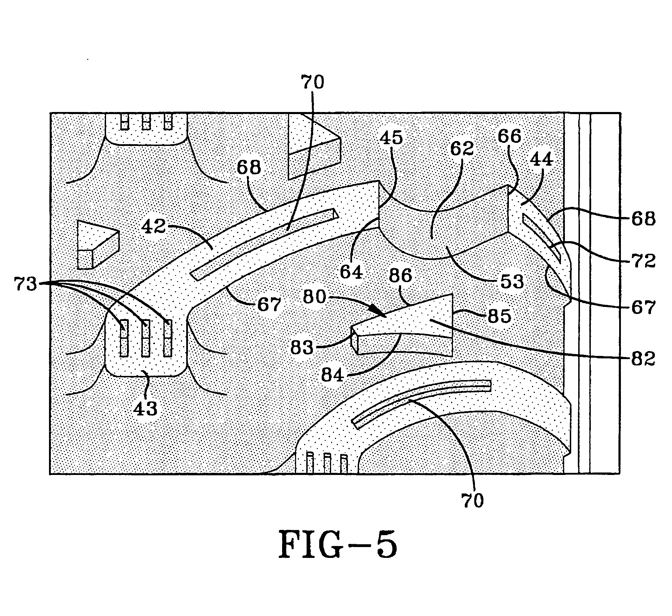

As further illustrated in FIGURE 5, the locations (62) do not have to extend full depth as shown in the preferred embodiment tire of FIGURES. 1, 2, 3, 4 and 6. The space between the lug (42) and the short block (44) can be bridged by a tie bar (53) of a reduced depth. It is believed important that this connection (53), between the lug (42) and the blocks (44), should leave an opening having a depth of at least 50 % of the lug depth (D) for the soil channel flow characteristics to be maintained. Lesser amounts of opening are believed to be too restrictive in terms of flow and therefore less desirable.

As can be appreciated from the above description a novel tread for superior off-road traction in ATV tires has been disclosed. Those skilled in the art will appreciate that subtle variations and modifications can be made without departing from the inventive concept. One such feature is the use of shallow grooves (70, 72, 73) within each of the lugs (40, 42) and blocks (44). These groove openings (70, 72, 73) of reduced depth provide additional traction edges. These features must be shallow to prevent the elongated lugs (40, 42) from becoming too flexible and thereby adversely influencing ride stability and tread wear.

These features of the tire (10) of the preferred embodiment are as described in published WO 98/03356 patent application. By combining these features with traction elements (80), an improved traction and wear performance can be achieved.

The traction elements (80) extend from the inner tread to the radially outermost surface (82). The distance from the inner tread to the radially outermost surface (82) is an amount (d), (d) being less than the distance (D), as measured from the radially outermost surface of the elongated lugs (40, 42).

Each traction element (80) has three or more sides (83, 84, 85 and 86) that extend from the inner tread to the radially outermost surface (82). At least one, preferably more, of the sides (83, 84, 85, 86) are inclined radially at an angle β of at least 8° or more, preferably about 10° to about 20° inclination. These sloping sides brace the tread element (80) increasing its overall stiffness.

The radially outer surface (82) occupies an area of not less than .25 square inches (160 mm²), preferably greater than .5 square inches (320 mm²), most preferably, much more. The size is clearly dependent on the amount of space available between the elongated lugs (40, 42).

Another feature that increases the stiffness of the traction elements (80) is the fact that the reduced depth (d) is preferably about 20% to 60% that of the full non-skid depth (D) of the elongated lugs (40, 42), generally about 50%. These shallow traction elements (80) are, thus, inherently stiffer due in part to the shallow depth (d).

The traction elements being so braced and of shallow depth with a relatively large surface area means that, as the tire tread lugs (40, 42) wear down, the traction elements increase the net contact area slowing the rate of treadwear.

In normal off-the-road uses, the edges of the traction elements (80) further assist in both traction and cornering handling by providing additional edges or sides, at least one of which is oriented parallel to an adjacent lug, thereby, increasing forward or lateral traction. Additionally, the placement of the traction elements (80) in the most opened areas of the soil discharge channels provides stubble damage and puncture resistance to the tread.

It is believed important that these traction elements (80) are positioned in locations where the soil discharge channels (60) merge such as in the center portion of the tread (12) at or near the openings (62) between the lugs (42) and the blocks (44). In so locating these traction elements (80), the soil discharge channels (60) have a portion of the soil redirected as the tire (10) revolves. This tends to improve overall soil flow which makes the lugs (40, 42) more efficient in wet or mud traction.

In the preferred embodiment tire (10), the traction elements (80) each have one or more sides (83, 84, 85, 86) have a concave curvature. These concave curvatures each are formed preferably by a single radius of curvature (R). These curvatures act like a redirector of the flow vector of the soil. That is as the soil impinges the traction element (80), the flow direction is changed in a way that somewhat follows the curvature of the concave surface. It is believed that the concavity more efficiently changes the flow direction and also increases the length of the edges of the elements (80), thus, helping in traction.

As shown, a traction element (80) is preferably located in a soil discharge channel in front of and axially substantially aligned with the opening (62), the curved side of the traction element (80) is positioned to allow the traction element (80) to redirect the portion of the soil flow through the opening.

Similarly, in the center of the of the tread, two traction elements (80) are located circumferentially adjacent the opening (61), one traction element (80) being at the entry of the opening and one being at the trailing or exit region of the opening. As shown, mud or soil flowing in the central region of the tread (12) has a portion of the flow diverted through the opening (61) as that redirected flow exits the opening (61), the trailing traction element (80) is positioned to redirect that flow axially outwardly through the circumferentially adjacent soil discharge channel (60). The overall effect creates a forward propulsion of the vehicle even when used in a water-like mixture of mud due to the traction elements creating improved soil flow in the tread contact patch. Since the traction elements (80) are of a reduced depth, the soil virtually cannot clog in between the elements (80) and the lugs (40, 42) when operating in mud.

In soft soil and gravel applications, the traction elements (80) also provide additional edges to help both forward and lateral traction.

## Claims

1. An off-the-road tire (10) having a radially outer tread (12) having a plurality of elongated lugs (40, 42), the elongated lugs (40, 42) having a maximum tread depth D as measured from a radially outer surface of the elongated lug inwardly to an inner tread (13), the inner tread (13), in combination with the elongated lugs (40,42), form channels (60) to discharge soil, the tire (10) having a plurality of traction elements (80) interposed between the elongated lugs (40, 42), the traction elements (80) having three or more sides (83,84,85,86) extending from the inner tread surface to a radially outermost surface, the surface having a maximum depth d, d being less than D, at least one side (83,84,85 or 86) of the tread elements being substantially parallel to an adjacent elongated lug (40, 42), **characterized in that** the traction elements (80) are positioned in an opening at an axially inner location (61) where the soil discharge channels (60) merge in the center portion of the tread (12).

2. The off-the-road tire (10) of claim 1 wherein one or more sides of the traction elements (80) are radially inclined at an angle β, β being equal or greater than 8°.

3. The off-the-road tire (10) of claim 1 or 2 wherein the elongated lugs (40, 42) have curved leading edges (67) and trailing edges (68).

4. The off-the-road tire (10) of claim 1 wherein the tire (10) has blocks (44) and the inner tread (13), in combination with the elongated lugs (40, 42) and the blocks 44 form openings at axially outer locations (62) to discharge soil, interposed in front of and substantially axially with these openings (62) are one or more traction elements (80) oriented to redirect or divert the discharging soil.

5. The off-the-road tire (10) of claim 4 wherein each traction element (80) has one side (83, 84, 85 or 86) having a concave curvature.

6. The off-the-road tire (10) of claim 2 wherein the radially outer surface (82) of the traction elements (80) occupies an area at least 0.25 square inches (160 mm²).

7. The off-the-road tire (10) of claim 1 is an ATV tire.

8. The off-the-road tire (10) of claim 7 has a carcass (30) reinforced by a ply structure (38) having two or more bias angled plies.

## Patentansprüche

1. Geländereifen (10), der einen radial äußeren Laufstreifen (12) mit mehreren lang gestreckten Stollen (40, 42) aufweist, wobei die lang gestreckten Stollen (40, 42) eine maximale Profiltiefe D gemessen von einer radial äußeren Oberfläche des lang gestreckten Stollens nach innen zu einem inneren Laufstreifen (13) besitzen, wobei der innere Laufstreifen (13) in Kombination mit den lang gestreckten Stollen (40, 42) Kanäle (60) bildet, um Erdreich abzuführen, wobei der Reifen (10) mehrere Traktionselemente (80) aufweist, die zwischen den lang gestreckten Stollen (40, 42) angeordnet sind, wobei die Traktionselemente (80) drei oder mehr Seiten (83, 84, 85, 86) aufweisen, die sich von der inneren Laufstreifenoberfläche zu einer radial äußersten Oberfläche erstrecken, wobei die Oberfläche, die eine maximale Tiefe d besitzt, wobei d kleiner als D ist, wenigstens eine Seite (83, 84, 85 oder 86) der Laufstreifenelemente im Wesentlichen parallel zu einem benachbarten lang gestreckten Stollen (40, 42) ist, **dadurch gekennzeichnet, dass** die Traktionselemente (80) in einer Öffnung an einer axial inneren Stelle (61), wo die Erdreichabführungskanäle (60) in den Mittelabschnitt des Laufstreifens (12) übergehen, angeordnet sind.

2. Geländereifen (10) nach Anspruch 1, bei dem eine oder mehrere Seiten der Traktionselemente (80) unter einem Winkel β radial geneigt sind, wobei β gleich 8° oder größer ist.

3. Geländereifen (10) nach Anspruch 1 oder 2, bei dem die lang gestreckten Stollen (40, 42) gekrümmte einlaufseitige Kanten (67) und auslaufseitige Kanten (68) aufweisen.

4. Geländereifen (10) nach Anspruch 1, wobei der Reifen (10) Blöcke (44) aufweist und der innere Laufstreifen (13) in Kombination mit den lang gestreckten Stollen (40, 42) und den Blöcken (44) an axial äußeren Stellen (62) Öffnungen bildet, um Erdreich abzuführen, wobei sich vor diesen Öffnungen (62) und im Wesentlichen axial darauf ausgerichtet ein oder mehrere Traktionselemente (80) befinden, die so orientiert sind, dass sie das abgeführte Erdreich umoder ableiten.

5. Geländereifen (10) nach Anspruch 4, bei dem jedes Traktionselement (80) eine Seite (83, 84, 85 oder 86) mit einer konkaven Krümmung aufweist.

6. Geländereifen (10) nach Anspruch 2, bei dem die radial äußere Oberfläche (82) der Traktionselemente (80) eine Fläche von wenigstens 0,25 Quadratzoll (160 mm²) belegt.

7. Geländereifen (10) nach Anspruch 1, der ein ATV-Reifen ist.

8. Geländereifen (10) nach Anspruch 7, der eine durch eine Lagenstruktur (38) mit zwei oder mehre Diagonallagen verstärkte Karkasse (30) enthält.

## Revendications

1. Bandage pneumatique pour service hors route (10) possédant une bande de roulement externe en direction radiale (12) comportant plusieurs barrettes allongées (40, 42), les barrettes allongées (40, 42) possédant une profondeur de bande de roulement maximale D telle qu'on la mesure depuis la surface externe en direction radiale de la barrette allongée vers l'intérieur jusqu'à la bande de roulement interne (13), la bande de roulement interne (13), en combinaison avec les barrettes allongées (40, 42), formant des canaux (60) pour évacuer la terre ou analogues, le bandage pneumatique (10) possédant plusieurs éléments de traction (80) intercalés entre les barrettes allongées (40, 42), les éléments de traction (80) possédant trois côtés (83, 84, 85, 86) ou plus s'étendant depuis la surface de bande de roulement interne jusqu'à une surface située le plus à l'extérieur en direction radiale, la surface possédant une profondeur maximale d, d étant inférieur à D, au moins un côté (83, 84, 85 ou 86) des éléments de bande de roulement étant essentiellement parallèle à une barrette allongée adjacente (40, 42), **caractérisé en ce que** les éléments de traction (80) sont disposés dans une ouverture à un endroit interne (61) en direction axiale, auquel les canaux (62) d'évacuation de la terre ou analogues fusionnent dans la portion centrale de la bande de roulement (12).

2. Bandage pneumatique pour service hors route (10) selon la revendication 1, dans lequel un ou plusieurs côtés des éléments de traction (80) sont inclinés en direction radiale en formant un angle , étant égal ou supérieur à 8 °.

3. Bandage pneumatique pour service hors route (10) selon la revendication 1 ou 2, dans lequel les barrettes allongées (40, 42) possèdent des bords avant (67) et des bords arrière (68) courbes.

4. Bandage pneumatique pour service hors route (10) selon la revendication 1, dans lequel le bandage pneumatique (10) possède des blocs (44) et la bande de roulement interne (13), en combinaison avec les barrettes allongées (40, 42) et avec les blocs (44), formant des ouvertures à des endroits externes en direction axiale (62) pour évacuer la terre ou analogues, un ou plusieurs éléments de traction (80), orientés pour rediriger ou dévier la terre ou analogues en cours d'évacuation, étant intercalés à l'avant de ces ouvertures (62) et en position essentiellement axiale par rapport auxdites ouvertures.

5. Bandage pneumatique pour service hors route (10) selon la revendication 4, dans lequel chaque élément de traction (80) possède un côté (83, 84, 85 ou 86) possédant une courbure concave.

6. Bandage pneumatique pour service hors route (10) selon la revendication 2, dans lequel la surface externe (82) en direction radiale des éléments de traction (80) occupe une aire de surface d'au moins 0,25 pouce carré (160 mm²).

7. Bandage pneumatique pour service hors route (10) selon la revendication 1, à savoir un bandage pneumatique pour véhicule tout-terrain.

8. Bandage pneumatique pour service hors route (10) selon la revendication 7, qui possède une carcasse (30) renforcée avec une structure de nappe (38) possédant deux nappes diagonales ou plus.
